# EUROPÄISCHE PATENTSCHRIFT

(11) **EP 4 467 431 B1**
(45) Veröffentlichungstag und Bekanntmachung des Hinweises auf die Patenterteilung: **15.04.2026**
(21) Anmeldenummer: 24175144.5
(22) Anmeldetag: 10.05.2024
(51) Int. Cl.: B62K 21/00

(54) **LEICHTFAHRZEUG, INSBESONDERE LASTENFAHRRAD**
LIGHT VEHICLE, ESPECIALLY CARGO BIKE
VÉHICULE LÉGER, NOTAMMENT VÉLO DE TRANSPORT

(30) Priorität: 15.05.2023 DE 202023102633 U
(43) Veröffentlichungstag der Anmeldung: 27.11.2024
(73) Patentinhaber: Kettler Alu-Rad GmbH, 50739 Köln (DE)
(72) Erfinder: Honkomp, Ole, 50935 Köln (DE)
(74) Vertreter: Patentanwälte Buschhoff Hennicke Althaus

(56) Entgegenhaltungen:
- EP-A1- 3 868 637
- WO-A1-2020/175981
- WO-A1-2023/166241
- DE-U1- 202014 003 119
- DE-U1- 202014 005 627
- JP-A- S63 232 087
- US-B2- 10 577 045

## Beschreibung

Die Erfindung betrifft ein Leichtfahrzeug, insbesondere Lastenfahrrad, mit einem Fahrzeugrahmen, einer am Fahrzeugrahmen angeordneten, nutzerbetätigbaren Lenkeinrichtung und einer in einem Längsabstand von der Lenkeinrichtung angeordneten lenkbaren Radaufnahme für ein Rad, wobei die Lenkeinrichtung mit der Radaufnahme mittels eines Lenkgestänges gekoppelt ist, das wenigstens teilweise an einer Unterseite des Fahrzeugrahmens und/oder unterhalb der Radaufnahme verlaufend angeordnet ist.

Lastenfahrräder, wie z.B. in der DE202014005627U1 offenbart, und ähnliche Leichtfahrzeuge sind im Straßenverkehr mittlerweile ein fast alltägliches Bild, denn elektrische Hilfsmotoren zur Tretkraftunterstützung ermöglichen es, mit solchen Fahrzeugen auch sperrige und/oder schwerere Lasten vergleichsweise einfach zu transportieren. Bekannte Lastenräder haben hierfür häufig zwischen der Lenkeinrichtung und dem gelenkten Rad - meist dem Vorderrad - einen Lastaufnahmebereich, z.B. eine Kiste mit darin angeordneten Kindersitzen, eine Lastpritsche o.dgl.. Da sich das gelenkte Rad somit in einem vergleichsweise großen Abstand von der vom Fahrer/der Fahrerin betätigten Lenkeinrichtung befindet, ist ein Lenkgestänge erforderlich, das die Lenkeinrichtung mit der Radaufnahme für das Rad koppelt und die Lenkbewegung, die von der/dem Fahrer*in ausgeführt wird, von der Lenkeinrichtung auf das gelenkte Rad zu übertragen. Um den Platz im Lastaufnahmebereich nicht einzuschränken, ist das Lenkgestänge zumindest teilweise an der Fahrzeugunterseite, insbesondere unterhalb einer Bodenplatte des Lastaufnahmebereichs angeordnet.

Da der Lastaufnahmebereich zur Erreichung eines günstigen Schwerpunkts des Fahrzeugs regelmäßig deutlich tiefer liegt als ein Sattel, auf dem der/die Fahrzeugnutzer*in sitzt, befindet sich das Lenkgestänge ebenfalls in entsprechend geringer Höhe über der Fahrbahnoberfläche. Dabei kann es im Verkehr zu Berührungskontakt z.B. mit Bordsteinkanten oder anderen Hindernissen kommen, was unter Umständen zu einer gefährlichen Situation für den/die Fahrer*in bis hin zum Sturz führen kann.

Aufgabe der Erfindung ist es, solche gefährlichen Situationen beim Fahren mit einem gattungsgemäßen Leichtfahrzeug zu vermeiden. Gelöst wird diese Aufgabe durch mindestens eine Schutzeinrichtung für zumindest Teile des Lenkgestänges. Die Schutzeinrichtung verhindert einen unbeabsichtigten Kontakt zwischen einem im Bereich des Fahrwegs liegenden Hindernis, z.B. einer Bordsteinkante, und dem von der Schutzeinrichtung geschützten Teil des Lenkgestänges, so dass dieses nicht an dem Hindernis anschlagen oder sich daran sogar verhaken kann.

Wenn das Lenkgestänge mindestens einen unterseitig am Fahrzeugrahmen schwenkbeweglich an einem Schwenklager gelagerten Lenkerarm umfasst, ist gemäß der Erfindung vorgesehen, dass die Schutzeinrichtung einen den Lenkerarm wenigstens im Bereich des Schwenklagers unterseitig abdeckenden Protektor aufweist. Der Protektor wird von einem lösbar am Fahrzeugrahmen montierten, das Schwenklager untergreifenden Schutzbügel gebildet, welcher bevorzugt mit einem vorderen Bügelsteg und einem hinterem Bügelsteg sowie einem unterhalb des Schwenklagers liegenden Bügelschenkel oder Bügelboden gebildet ist, wobei der Schutzbügel mit den beiden Bügelstegen am Fahrzeugrahmen festgelegt ist. Beispielsweise kann der Protektor aus einem stabilen Blech aus Stahl oder Aluminium bestehen, das vorne und hinten zur Ausbildung der Bügelstege abgewinkelt ist. Vorzugsweise ist der vordere Bügelsteg unter einem stumpfen Winkel von vorzugsweise größer 120° schräg zum Bügelboden geneigt. Er bildet damit eine schräge Auflauffläche, die sich mit vergleichsweise geringem Widerstand auf ein Hindernis schieben kann, so dass dieses unter den Protektor gedrückt und damit zuverlässig auf Abstand zu dem geschützten Teil des Lenkgestänges gehalten wird.

Der Protektor kann am Fahrzeugrahmen mittels einer Steck-, Rast- und/oder Schraubverbindung lösbar befestigt sein. Er löst sich somit ohne weiteres abbauen, beispielsweise um Zugang zum Lenkgestänge zu wartungszwecken zu ermöglichen, oder auch, um einen durch häufigen Kontakt mit Hindernissen verschlissenen Protektor gegen ein Ersatzteil auszutauschen.

In besonders vorteilhafter Ausgestaltung der Erfindung, bei der die Radaufnahme an einer am Fahrzeugrahmen angeordneten Radgabel ausgebildet und mittels einer Koppelstange des Lenkgestänges von der Lenkeinrichtung betätigbar ist, kann die Schutzvorrichtung eine Koppelstangenführung umfassen, mittels der die Koppelstange relativ zum Fahrzeugrahmen und oder der Radgabel längsbeweglich geführt ist. Vorzugsweise ist die Anordnung dabei so getroffen, dass die Koppelstangenführung im Wesentlichen gebildet wird von einer Gelenkstange, die mit einer ersten Gelenkverbindung mit der Koppelstange und mit einer zweiten Gelenkverbindung mit dem Fahrzeugrahmen oder der Radgabel gelenkig verbunden ist. Bei dieser Anordnung erhält die Koppelstange des Lenkgestänges, die die Lenkbewegung in die Radaufnahme einleitet, eine Unterstützung in Vertikalrichtung, so dass sie von der Koppelstangenführung in einem ausreichend großen Abstand von der Fahrbahn und darin befindlichen Hindernissen geführt bzw. gehalten wird. Die Ausgestaltung mit der Gelenkstange, die bei der Ausführung von Lenkbewegungen um ihren Drehpunkt an der zweiten Gelenkverbindung verschwenkt wird, kann dabei zudem eine Anhebung der Koppelstange zur Folge haben, wenn mit dem Fahrzeug eine Kurve gefahren wird. Da Abstand der Koppelstange von der Fahrbahn kann also bei Kurvenfahrt gezielt vergrößert werden.

In vorteilhafter Weiterbildung kann die Gelenkstange mit einer Längeneinstellvorrichtung zur Einstellung des wirksamen Abstands zwischen der ersten und der zweiten Gelenkverbindung versehen sein. Die Radaufnahme wird gemäß einer vorteilhaften Ausgestaltung der Erfindung im Wesentlichen von einer Radnabenlenkung gebildet, die an einem freien Ende mindestens eines Radgabelarms angeordnet ist. Mit einer derartigen Radnabenlenkung ist eine besonders präzise, feinfühlige Betätigung der Lenkung des Rades möglich.

Insbesondere bei der Ausführungsform mit Radnabenlenkung kann die Koppelstange zwischen ihren Anlenkpunkten an der Radaufnahme und der Lenkeinrichtung oder dem Lenkerarm relativ zu dem Rad vorzugsweise nach außen gekröpft oder abgewinkelt sein, um ausreichend Platz für das gelenkte Rad bei vollem Lenkeinschlag zu gewährleisten. Vorzugsweise ist dann die Koppelstangenführung in dem gekröpften Bereich oder im Bereich der Abwinklung der Koppelstange wirksam. Insbesondere ist die Anordnung bevorzugt so, dass die Gelenkstange mit ihrer ersten Gelenkverbindung im gekröpften Bereich oder dem Bereich der Abwinklung der Koppelstange angelenkt ist.

Es ist auch möglich, dass die Radgabel mindestens einen Radgabelarm aufweist, der relativ zum Rad nach außen gekröpft oder abgewinkelt ist. Vorzugsweise ist dann die Gelenkstange mit ihrer zweiten Gelenkverbindung an dem gekröpftem Abschnitt oder dem Bereich der Abwinklung des Radgabelarms oder eines der Radgabelarme angelenkt.

Weitere Merkmale und Vorteile der Erfindung ergeben sich aus der nachfolgenden Beschreibung und der Zeichnung, worin eine bevorzugte Ausführungsform der Erfindung anhand eines Beispiels dargestellt ist. Es zeigT:
- Fig.1: ein erfindungsgemäßes Leichtfahrzeug in Gestalt eines Lastenfahrrads in einer Seitenansicht;
- Fig.2: den Gegenstand der Fig.1 in einer Unteransicht; und
- Fig.3: ein Detail des Lenkgestänges des Fahrzeugs nach Fig.1 und Fig. 2 in einer perspektivischen Ansicht von schräg unten.

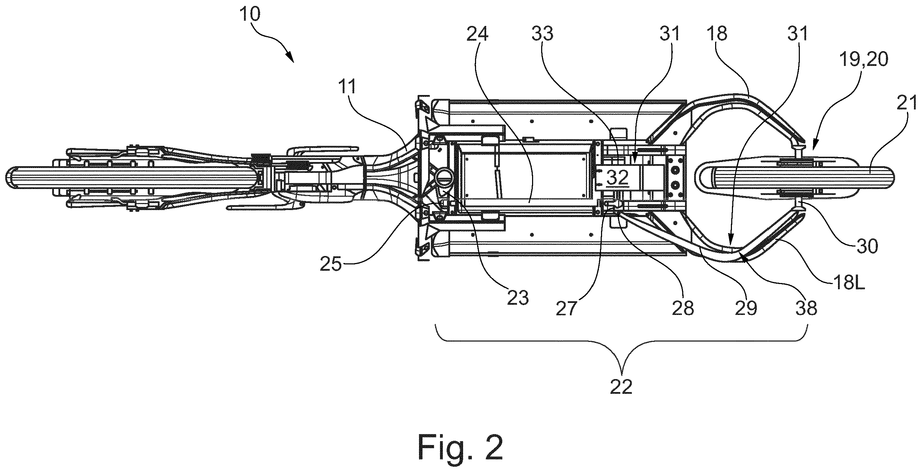

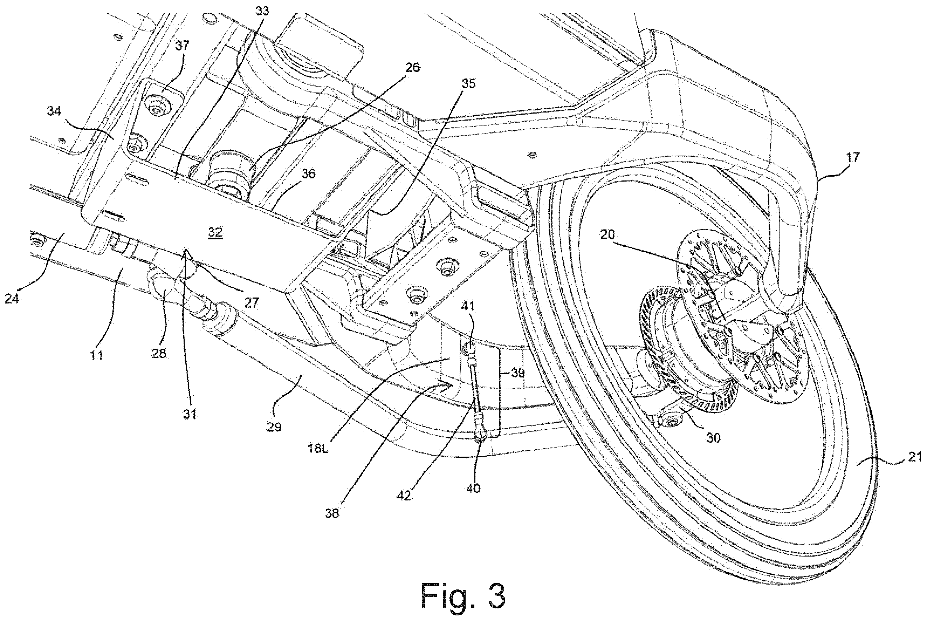

Das in der Zeichnung in seiner Gesamtheit mit 10 bezeichnete Lastenfahrrad weist in bekannter Weise einen Fahrzeugrahmen 11 mit einer Hinterradgabel für ein mittels eines Riemen- oder Kettenantriebs angetriebenes Hinterrad auf. Vor der Hinterradgabel befindet sich ein Sattelrohr mit einem in der Höhe verstellbaren Fahrradsattel für den/die Fahrer*in des Lastenrads. Etwa in der Fahrzeugmitte ist das Lastenrad mit einer Lenkeinrichtung 12 versehen, die in bekannter Weise eine in einem Lenkerrohr 13 drehbar gelagerte Lenkstange 14 sowie einen an deren oberen Ende montierten Lenker 15 zur Betätigung durch die/den Fahrer*in umfasst. Im Bereich vor dem Lenkerrohr weist das Lastenfahrrad eine tief liegende, langgestreckte Transportplattform 16 auf, an deren vorderen Ende eine Radgabel 17 mit zwei nach vorne vorspringenden Radgabelarmen 18 angelenkt ist, die zwischen ihren vorderen Gabelenden eine lenkbare Radaufnahme 19 in Form einer Radnabenlenkung 20 für ein Vorderrad 21 aufnehmen. Die Transportplattform 21 erstreckt sich exakt oder näherungsweise auf Höhe der Radachse des Vorderrads 21. Die Radnabenlenkung 20 kann mittels der Lenkeinrichtung 12 über ein Lenkgestänge 22 betätigt werden, das an der Unterseite des Fahrzeugrahmens 11 und unterhalb der Radaufnahme 19 für das Vorderrad 21 verläuft, wie dies in den Fig. 2 und Fig. 3 erkennbar ist.

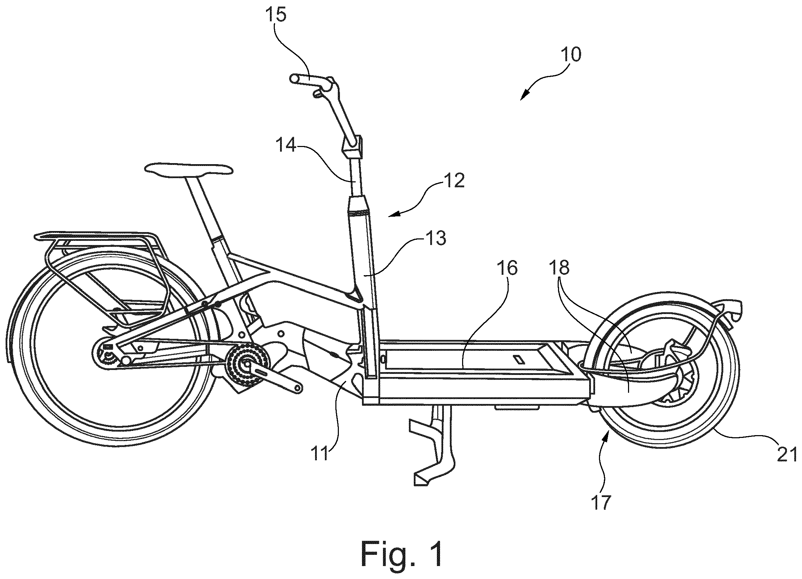

Wie man gut in Fig.2 erkennen kann, ist die unten aus dem Lenkerrohr 13 ein Stück weit nach unten vorspringende Lenkstange (14. Fig. 1) mit einem quer zur Fahrzeuglängsrichtung angeordneten Betätigungshebel 23 versehen, an dessen freien Ende eine Verbindungsstange 24 mit einem ersten Kugelgelenk 25 gelenkig angeschlossen ist. Das andere, vordere Ende der Verbindungsstange 24 ist wiederum mit einem zweiten Kugelgelenk an einem dreh-schwenkbar am Fahrzeugrahmen 11 an einem Schwenklager 26 gelagerten Lenkerarm 27 verbunden, den sie bei Betätigung der Lenkereinrichtung um seine vertikale Schwenkachse verstellt. Am äußeren, freien Ende des Lenkerarms 27 befindet sich ein weiteres, drittes Kugelgelenk 28, an welchem eine Koppelstange 29 angeschlossen ist, deren anderes, vorderes Ende wiederum gelenkig an einem Anlenkhebel 30 der Radaufnahme angreift. Die von dem/der Fahrer*in mit dem Lenker in die Lenkstange eingebrachte Lenkbewegung wird somit über das Lenkgestänge 22, das im Wesentlichen aus den Teilen 23, 24, 27, 29 und 30 sowie den diese Teile gelenkig verbindenden Kugelgelenken 25, 28 und Lagern besteht, von dem Betätigungshebel 23 über die Verbindungsstange 24, den Lenkerhebel 27, die Koppelstange 29 und den Anlenkhebel 30 in die Radnabenlenkung 20 übertragen und bewirkt den Lenkeinschlag des Vorderrads 21 in die gewünschte Richtung und in dem gewünschten Maß.

Für das Lenkgestänge 22 sind erfindungsgemäß Schutzeinrichtungen 31 vorgesehen, um zu verhindern, dass Hindernisse auf der Fahrbahn in Kontakt mit den besonders gefährdeten Teilen des Lenkgestänges 22 gelangen und zu gefährlichen Situationen für den/die Fahrer*in führen können. Zu den Schutzeinrichtungen 31 gehört zum einen ein Protektor 32 im Bereich des Schwenklagers 26 für den Lenkerarm 27. Der Protektor 32 wird gebildet von einem aus stabilem, mehrfach abgekantetem Aluminium- oder Stahlblech bestehenden Schutzbügel 33, der einen hinteren, im Wesentlichen senkrecht stehenden Bügelsteg 34 und einen vorderen, schräg nach vorne geneigten Bügelsteg 35 sowie einen sich zwischen den beiden Bügelstegen erstreckenden Bügelboden 36 hat, welcher das Schwenklager 26 des Lenkerarms 27 unterseitig, mithin im Betrieb des Fahrzeugs zur Fahrbahn hin, abdeckt. Die Neigung des vorderen Bügelstegs 35 beträgt, gemessen vom unteren, im Wesentlichen horizontal verlaufenden Bügelboden 36 im gezeigten Ausführungsbeispiel ca. 135°. Je flacher der vordere Bügelsteg 35 geneigt ist, umso leichter kann der Protektor 32 über ein auf dem Fahrweg liegendes Hindernis gleiten oder über eine Bordsteinkante o.dgl. hinwegrutschen. Da der Schutzbügel 33 seitlich offen ist, kann sich der Lenkerarm 27 vom Bügel unbehindert um das zum Lenken erforderliche Maß nach vorne und hinten bewegen. Der vordere Bügelsteg 35 ist oben mit einer im Wesentlichen horizontal nach vorne vorstehenden Montagezunge versehen, mit der er in eine passende Aussparung am Fahrzeugrahmen einfasst. Der hintere Bügelsteg 34 hat einen abgewinkelten Montageflansch 37 mit Bohrungen für Befestigungsschrauben, die durch Langlöcher im Bügelboden zugänglich sind und mittels eines ausreichend langen Schraubwerkzeugs in Gewindebohrungen am Fahrzeugrahmen geschraubt sind.

Ein weiteres Element der Schutzeinrichtungen umfasst eine Koppelstangenführung 38 für die Koppelstange 29, mit der diese relativ zur Vorderradgabel 17 in Längsrichtung geführt wird. Die Koppelstangenführung 38 wird dabei im Wesentlichen gebildet wird von einer Gelenkstange 39, die mit einer ersten Gelenkverbindung 40 mit der Koppelstange 29 und mit einer zweiten Gelenkverbindung 41 mit dem im gezeigten Ausführungsbeispiel linken Gabelarm 18L der Radgabel 17 gelenkig verbunden ist. Wie man sieht, ist zum einen die Koppelstange 29 zwischen ihren Anlenkpunkten 28,30 an dem Lenkerarm 27 und der Radaufnahme 19 relativ zu dem Rad 21 nach außen gekröpft oder abgewinkelt ist, zum anderen sind auch die Gabelarme 18 der Radgabel 17 durch eine entsprechend abgewinkelte Gestaltung so ausgestaltet, dass sie einen ausreichend großen Freiraum für das Vorderrad 21 auch bei vollem Lenkeinschlag gewährleisten, so dass der Reifen auch bei enger Kurvenfahrt nicht an der Koppelstange 29 oder dem jeweils kurvenaußenseitig liegenden Gabelarm 18 schleifen kann. Die Koppelstangenführung in Form der Gelenkstange 39 ist im Bereich der Abwinklung der Koppelstange 29 und des im Ausführungsbeispiel linksseitigen Gabelarms 18L angelenkt. Sie bewirkt, dass die Koppelstange infolge ihres Eigengewichtes nicht zwischen Ihrem vorderen Anlenkpunkt am Anlenkhebel 30 und ihrem hinteren Anlenkpunkt 28 am Lenkerhebel 27 nach unten abkippt und hierdurch zu nah an die Fahrbahn heranreicht, was bei einer Kurvenfahrt, bei der sich das Fahrzeug oder Lastenfahrrad auf die Seite neigt, an der sich die Koppelstange befindet, zu einem unerwünschten Kontakt zwischen dieser und der Fahrbahn führen kann. Andererseits sorgt die Gelenkstange 39 auch dafür, dass die Koppelstange nicht nach oben auslenken und dabei in unkontrollierter Weise am Gabelarm 18L oder einem Teil des Fahrzeugrahmens 11 anschlagen kann. Die vorteilhafte, konstruktive Lösung der Koppelstangenführung 38, bei der sich die Gelenkstange 39 infolge eines Lenkeinschlags um die zweite Gelenkverbindung 41 ein stück weit auf einer Kreisbahn verdreht, sorgt darüber hinaus dafür, dass die untere Gelenkverbindung 40 ein kleines Stück angehoben wird, wenn der/die Fahrer*in die Lenkung einschlägt, womit zusätzliche Bodenfreiheit unter der Koppelstange 29 gewonnen wird.

Die Gelenkstange 39 kann in ihrer Länge eingestellt werden. Zu diesem Zweck können die beiden Gelenkköpfe der beiden Gelenkverbindungen 40, 41 unterschiedlich weit auf eine zwischen ihnen sich erstreckende Gewindestange 42 aufgeschraubt werden, um so den wirksamen Abstand zwischen der ersten und der zweiten Gelenkverbindung zu verändern und die Koppelstange relativ zum darüber verlaufenden Gabelarm anzuheben oder abzusenken.

Die seitliche Ausladung der Kröpfung oder Abwinklung des Radgabelarms 18L der Radgabel 17 ist mindestens gleich, vorzugsweise geringfügig größer als die Kröpfung oder Abwinklung der Koppelstange 29, wodurch der zugehörige Radgabelarm unter bestimmten Konstellationen auch einen seitlichen Schutz für das Lenkgestänge und die Koppelstange gewährleisten kann.

Das Leichtfahrzeug bzw. Lastenfahrrad kann insbesondere auch mit einem Elektroantrieb zur Trittkraft-Unterstützung versehen sein und entsprechend auch im Fahrzeugrahmen oder am Gepäckträger im Festungseinrichtung für eine Batterie aufweisen. Solche und weitere für den Fachmann offensichtliche Varianten sollen mit in den Schutzbereich der anhängenden Ansprüche fallen.

## Patentansprüche

1. Leichtfahrzeug, insbesondere Lastenfahrrad (10), mit einem Fahrzeugrahmen (11), einer am Fahrzeugrahmen (11) angeordneten, nutzerbetätigbaren Lenkeinrichtung (12) und einer in einem Längsabstand von der Lenkeinrichtung (12) angeordneten lenkbaren Radaufnahme (19) für ein Rad (21), wobei die Lenkeinrichtung (12) mit der Radaufnahme (19) mittels eines Lenkgestänges (22) gekoppelt ist, das wenigstens teilweise an einer Unterseite des Fahrzeugrahmens (11)verlaufend angeordnet ist und mindestens einen unterseitig am Fahrzeugrahmen schwenkbeweglich an einem Schwenklager (26) gelagerten Lenkerarm (27) umfasst, mit mindestens einer Schutzeinrichtung (31) für zumindest Teile des Lenkgestänges (22) **dadurch gekennzeichnet, dass** die Schutzeinrichtung (31) am Fahrzeugrahmen montiert ist und einen den Lenkerarm (27) wenigstens im Bereich des Schwenklagers (26) unterseitig abdeckenden, lösbar am Fahrzeugrahmen (11) montierten, das Schwenklager (26) untergreifenden Schutzbügel (33) als Protektor (32) aufweist.

2. Leichtfahrzeug nach Anspruch 1, **dadurch gekennzeichnet, dass** das Lenkgestänge (22) unterhalb der Radaufnahme (19) verlaufend angeordnet ist.

3. Leichtfahrzeug nach Anspruch 1 oder 2, **dadurch gekennzeichnet, dass** der Schutzbügel (33) einen vorderen Bügelsteg (35) und einem hinteren Bügelsteg (34) sowie einen unterhalb des Schwenklagers (26) liegenden Bügelschenkel oder Bügelboden 36() aufweist, wobei der Schutzbügel (33) mit den beiden Bügelstegen (34, 35) am Fahrzeugrahmen (11) festgelegt ist.

4. Leichtfahrzeug nach Anspruch 3, **dadurch gekennzeichnet, dass** der vordere Bügelsteg (35) unter einem stumpfen Winkel von vorzugsweise größer 120° schräg zum Bügelboden (36) geneigt ist.

5. Leichtfahrzeug nach einem der Ansprüche 3 oder 4, **dadurch gekennzeichnet, dass** der vordere Bügelsteg (35) eine nach vorne vorstehende Montagezunge aufweist, die in eine passende Aussparung am Fahrzeugrahmen einfasst, und der hintere Bügelsteg einen Montageflansch mit Bohrungen für Befestigungsschrauben aufweist, mit denen der Schutzbügel mit dem Fahrzeugrahmen verschraubt ist.

6. Leichtfahrzeug nach einem der Ansprüche 1 bis 5, **dadurch gekennzeichnet, dass** der Protektor (32) am Fahrzeugrahmen (11) mittels einer Steck-, Rast- und/oder Schraubverbindung lösbar befestigt ist.

7. Leichtfahrzeug nach einem der Ansprüche 1 bis 6, **dadurch gekennzeichnet, dass** die Radaufnahme (19) an einer am Fahrzeugrahmen (11) angeordneten Radgabel (17) ausgebildet und mittels einer Koppelstange (29) des Lenkgestänges (22) von der Lenkeinrichtung (12) betätigbar ist, und dass die Schutzeinrichtung (31) eine Koppelstangenführung (38) umfasst, mittels der die Koppelstange (29) relativ zum Fahrzeugrahmen (11) und oder der Radgabel (17) längsbeweglich geführt ist.

8. Leichtfahrzeug nach Anspruch 7, **dadurch gekennzeichnet, dass** die Koppelstangenführung (38) im Wesentlichen gebildet wird von einer Gelenkstange (39), die mit einer ersten Gelenkverbindung (41) mit der Koppelstange (29) und mit einer zweiten Gelenkverbindung (40) mit dem Fahrzeugrahmen oder der Radgabel (17) gelenkig verbunden ist.

9. Leichtfahrzeug nach Anspruch 8, **dadurch gekennzeichnet, dass** die Gelenkstange (39) mit einer Längeneinstellvorrichtung (42) zur Einstellung des wirksamen Abstands zwischen der ersten und der zweiten Gelenkverbindung (41,40) versehen ist.

10. Leichtfahrzeug nach einem der Ansprüche 1 bis 9, **dadurch gekennzeichnet, dass** die Radaufnahme (19) im Wesentlichen gebildet wird von einer Radnabenlenkung (20), die an einem freien Ende mindestens eines Radgabelarms (18) angeordnet ist.

11. Leichtfahrzeug nach einem der Ansprüche 7 bis 10, **dadurch gekennzeichnet, dass** die Koppelstange (29) zwischen ihren Anlenkpunkten (28,30) an der Radaufnahme (19) und der Lenkeinrichtung oder dem Lenkerarm (25) relativ zu dem Rad (21) nach außen gekröpft oder abgewinkelt ist, und dass die Koppelstangenführung (38) in dem gekröpften Bereich oder im Bereich der Abwinklung der Koppelstange (29) wirksam ist.

12. Leichtfahrzeug nach Anspruch 11, **dadurch gekennzeichnet, dass** die Gelenkstange (39) mit ihrer ersten Gelenkverbindung (41) im gekröpften Bereich oder dem Bereich der Abwinklung der Koppelstange (29) angelenkt ist.

13. Leichtfahrzeug nach einem der Ansprüche 7 bis 12, **dadurch gekennzeichnet, dass** die Radgabel (17) mindestens einen Radgabelarm (18) aufweist, der relativ zum Rad (21) nach außen gekröpft oder abgewinkelt ist.

14. Leichtfahrzeug nach Anspruch 13, **dadurch gekennzeichnet, dass** die Gelenkstange (39) mit ihrer zweiten Gelenkverbindung (40) an dem gekröpftem Abschnitt oder dem Bereich der Abwinklung des Radgabelarms (18L) oder eines der Radgabelarme (18) angelenkt ist.

15. Leichtfahrzeug nach Anspruch 14, **dadurch gekennzeichnet, dass** die seitliche Ausladung der Kröpfung oder Abwinklung des Radgabelarms (18L) der Radgabel gleich oder größer ist als die Kröpfung oder Abwinklung der Koppelstange (29).

## Claims

1. Light vehicle, in particular cargo bicycle (10), with a vehicle frame (11), a steering device (12) arranged on the vehicle frame (11) and operable by a user, and a steerable wheel mount (19) for a wheel (21) arranged at a longitudinal distance from the steering device (12), wherein the steering device (12) is coupled to the wheel mount (19) by means of a steering linkage (22) which is arranged at least partially on an underside of the vehicle frame (11) and comprises at least one steering arm (27) mounted on a pivot bearing (26) on the underside of the vehicle frame so as to be pivotable, with at least one protective device (31) for at least parts of the steering linkage (22), **characterized in that** the protective device (31) is mounted on the vehicle frame and has a protective bar (33) as a protector (32) which covers the steering arm (27) at least in the area of the pivot bearing (26) on the underside, is detachably mounted on the vehicle frame (11) and engages under the pivot bearing (26).

2. Light vehicle according to claim 1, **characterized in that** the steering linkage (22) is arranged running below the wheel mount (19).

3. Light vehicle according to claim 1 or 2, **characterized in that** the protective bar (33) has a front bar web (35) and a rear bar web (34) and a bar leg or bar base (36) located below the pivot bearing (26), wherein the protective bar (33) is fixed to the vehicle frame (11) with the two bar webs (34, 35).

4. Light vehicle according to claim 3, **characterized in that** the front bar web (35) is inclined at an obtuse angle of preferably greater than 120° to the bar base (36).

5. Light vehicle according to one of claims 3 or 4, **characterized in that** the front bar web (35) has a mounting tongue projecting forward, which fits into a corresponding recess on the vehicle frame, and the rear bar web has a mounting flange with holes for fastening screws, with which the protective bar is screwed to the vehicle frame.

6. Light vehicle according to one of claims 1 to 5, **characterized in that** the protector (32) is detachably fastened to the vehicle frame (11) by means of a plug-in connection, snap-in connection, and/or screw connection.

7. Light vehicle according to one of claims 1 to 6, **characterized in that** the wheel mount (19) is formed on a wheel fork (17) arranged on the vehicle frame (11) and is actuable by the steering device (12) by means of a coupling rod (29) of the steering linkage (22), and that the protective device (31) comprises a coupling rod guide (38) by means of which the coupling rod (29) is guided so as to be longitudinally movable relative to the vehicle frame (11) and/or the wheel fork (17).

8. Light vehicle according to claim 7, **characterized in that** the coupling rod guide (38) is essentially formed by a joint rod (39) which is hinged to the coupling rod (29) by a first joint connection (41) and to the vehicle frame or the wheel fork (17) by a second joint connection (40).

9. Light vehicle according to claim 8, **characterized in that** the joint rod (39) is provided with a length adjustment device (42) for adjusting the effective distance between the first and second joint connections (41, 40).

10. Light vehicle according to one of claims 1 to 9, **characterized in that** the wheel mount (19) is essentially formed by a wheel hub steering mechanism (20) which is arranged at a free end of at least one wheel fork arm (18).

11. Light vehicle according to one of claims 7 to 10, **characterized in that** the coupling rod (29) is cranked or angled outwards between its pivot points (28, 30) on the wheel mount (19) and the steering device or the steering arm (25) relative to the wheel (21), and that the coupling rod guide (38) is effective in the cranked area or in the area of the angle of the coupling rod (29).

12. Light vehicle according to claim 11, **characterized in that** the joint rod (39) is articulated with its first joint connection (41) in the cranked area or the area of the angle of the coupling rod (29).

13. Light vehicle according to one of claims 7 to 12, **characterized in that** the wheel fork (17) has at least one wheel fork arm (18) which is cranked or angled outwards relative to the wheel (21).

14. Light vehicle according to claim 13, **characterized in that** the joint rod (39) is articulated with its second joint connection (40) on the cranked section or the area of deflection of the wheel fork arm (18L) or one of the wheel fork arms (18).

15. Light vehicle according to claim 14, **characterized in that** the lateral projection of the offset or angulation of the wheel fork arm (18L) of the wheel fork is equal to or greater than the offset or angulation of the coupling rod (29).

## Revendications

1. Véhicule léger, en particulier vélo cargo (10), avec un cadre de véhicule (11), un système de direction (12) pouvant être actionné par l'utilisateur, disposé sur le cadre de véhicule (11) et un logement de roue (19) dirigeable pour une roue (21), disposé à une certaine distance longitudinale du système de direction (12), le système de direction (12) étant accouplé au logement de roue (19) au moyen d'une tringlerie de direction (22), qui est disposée au moins en partie sur un côté inférieur du cadre de véhicule (11) et comprend au moins un bras de direction (27) monté de manière mobile par pivotement sur un palier de pivotement (26) sur le côté inférieur du cadre du véhicule, avec au moins un système de protection (31) pour au moins des parties de la tringlerie de direction (22), **caractérisé en ce que** le système de protection (31) est monté sur le cadre de véhicule et comporte, en tant qu'élément de protection (32), un étrier de protection (33) recouvrant côté inférieur le bras de direction (27) au moins dans la zone du palier de pivotement (26), monté de manière amovible sur le cadre de véhicule (11) et venant en prise par le bas avec le palier de pivotement (26).

2. Véhicule léger selon la revendication 1, **caractérisé en ce que** la tringlerie de direction (22) est disposée de manière à s'étendre au-dessous du logement de roue (19).

3. Véhicule léger selon la revendication 1 ou 2, **caractérisé en ce que** l'étrier de protection (33) comporte une entretoise d'étrier avant (35) et une entretoise d'étrier arrière (34) ainsi qu'une branche d'étrier ou un fond d'étrier (36) situé(e) en dessous du palier de pivotement (26), l'étrier de protection (33) étant fixé sur le cadre de véhicule (11) par les deux entretoises d'étrier (34, 35).

4. Véhicule léger selon la revendication 3, **caractérisé en ce que** l'entretoise d'étrier avant (35) est inclinée à l'oblique par rapport au fond d'étrier (36) selon un angle obtus de préférence supérieur à 120°.

5. Véhicule léger selon l'une des revendications 3 ou 4, **caractérisé en ce que** l'entretoise d'étrier avant (35) comporte une languette de montage faisant saillie vers l'avant, qui s'insère dans un évidement adapté du cadre de véhicule, et l'entretoise d'étrier arrière comporte une bride de montage avec des alésages pour des vis de fixation, au moyen desquelles l'étrier de protection est vissé au cadre de véhicule.

6. Véhicule léger selon l'une des revendications 1 à 5, **caractérisé en ce que** l'élément de protection (32) est fixé de manière amovible sur le cadre de véhicule (11) au moyen d'une liaison par enfichage, par encliquetage et/ou par vissage.

7. Véhicule léger selon l'une des revendications 1 à 6, **caractérisé en ce que** le logement de roue (19) est formé sur une fourche de roue (17) disposée sur le cadre de véhicule (11) et peut être actionné par le système de direction (12) au moyen d'une tige d'accouplement (29) de la tringlerie de direction (22), et que le système de protection (31) comprend un guidage (38) de tige d'accouplement, au moyen duquel la tige d'accouplement (29) est guidée de manière à pouvoir être mobile longitudinalement par rapport au cadre de véhicule (11) ou à la fourche de roue (17).

8. Véhicule léger selon la revendication 7, **caractérisé en ce que** le guidage (38) de tige d'accouplement est formé sensiblement par une tige articulée (39), qui est reliée de manière articulée à la tige d'accouplement (29) par une première liaison articulée (41) et au cadre de véhicule ou à la fourche de roue (17) par une deuxième liaison articulée (40).

9. Véhicule léger selon la revendication 8, **caractérisé en ce que** la tige articulée (39) est pourvue d'un dispositif de réglage de longueur (42) destiné à régler la distance effective entre la première et la deuxième liaison articulée (41, 40).

10. Véhicule léger selon l'une des revendications 1 à 9, **caractérisé en ce que** le logement de roue (19) est formé sensiblement par un système de direction de moyeu de roue (20), qui est disposé sur une extrémité libre d'au moins un bras (18) de fourche de roue.

11. Véhicule léger selon l'une des revendications 7 à 10, **caractérisé en ce que** la tige d'accouplement (29) est coudée ou pliée vers l'extérieur par rapport à la roue (21) entre ses points d'articulation (28, 30) sur le logement de roue (19) et le système de direction ou le bras de direction (25), et que le guidage (38) de tige d'accouplement est efficace dans la zone coudée ou dans la zone de la partie pliée de la tige d'accouplement (29).

12. Véhicule léger selon la revendication 11, **caractérisé en ce que** la tige articulée (39) est articulée par sa première liaison articulée (41) dans la zone coudée ou dans la zone de la partie pliée de la tige d'accouplement (29).

13. Véhicule léger selon l'une des revendications 7 à 12, **caractérisé en ce que** la fourche de roue (17) comporte au moins un bras (18) de fourche de roue, qui est coudé ou plié vers l'extérieur par rapport à la roue (21).

14. Véhicule léger selon la revendication 13, **caractérisé en ce que** la tige articulée (39) est articulée par sa deuxième liaison articulée (40) sur la section coudée ou sur la zone de la partie pliée du bras (18L) de fourche de roue ou de l'un des bras (18) de fourche de roue.

15. Véhicule léger selon la revendication 14, **caractérisé en ce que** la portée latérale de la partie coudée ou de la partie pliée du bras (18L) de fourche de roue de la fourche de roue est égale ou supérieure à celle de la partie coudée ou de la partie pliée de la tige d'accouplement (29).
